# EUROPEAN PATENT APPLICATION

(11) **EP 2 641 726 A1**
(43) Date of publication of application: **25.09.2013**
(21) Application number: 12160513.3
(22) Date of filing: 21.03.2012
(51) Int. Cl.: B29C 70/52, E06B 3/22

(54) **Method and apparatus for preventing thermal bridges in fibre reinforced structural elements**

(71) Applicant: FIBERLINE A/S, 5500 Middelfart (DK)
(72) Inventor: The designation of the inventor has not yet been filed
(74) Representative: Nielsen, Henrik Sten

(57) **Abstract**

A method of dimensioning and producing a fibre reinforced structural element including reinforcing fibres. Establishing a stress distribution along the transverse direction of the fibre reinforced structural element and establishing locations of higher stress and lower stress along the transverse direction within said fibre reinforced structural element as compared to the average stress along said transverse direction by using said stress distribution. Introducing the reinforcing fibres, the insulating material and the impregnation material into a pultrusion assembly for establishing higher concentrations of the reinforcing fibres at the locations of higher stress and lower concentrations of reinforcing fibres at the locations of lower stress, larger volumes of the insulating material at the locations of lower stress and smaller volumes or no volume of the insulating material at the locations of higher stress. Additionally, the reinforcing fibres are impregnated by the impregnation material and subsequently the impregnation material is cured.

## Description

The present invention relates generally to an apparatus and a method for producing fibre reinforced structural elements having excellent strength and load-bearing capabilities, low weight as well as superior insulating properties. The present invention also relates to the provision of insulated fibre reinforced structural elements for use as e.g. window frames and load-bearing beams Yet further, the present invention relates to a building structure.

The use of fibre reinforced structural elements has increased rapidly within the last decades. Within the building industry, fibre reinforced structural elements have gained success as load-bearing elements due to their low weight as compared to their load-bearing capabilities. Further advantages includes a high resistance to corrosion and excellent electrical insulating properties. The production of fibre reinforced structural elements using the pultrusion technique is, as such, generally known. Pultrusion is understood to be the technology in which structural profiles with identical cross-section configuration are produced by impregnating a continuous bundle or web of reinforcing fibres, typically glass fibres, in a bath of curable matrix material, i.e. polymeric impregnation material, and, subsequently pulling the impregnated fibres through a die for achieving a specific cross-section configuration of the end product. One example of a pultruded building element in the form of a window element is disclosed in US2008/0313963 assigned to the company Fiberline A/S The above document in particular discloses a weather resistant building element.

However, a drawback of the above mentioned fibre reinforced structural elements is the fact that both the cured polymeric impregnation material as well as the reinforcing fibres have a relatively high thermal conductivity.. When such fibre reinforced structural elements are used in a building structure subjected to a temperature difference, as e.g. a window frame or as a beam between a cold area, e.g. an outdoor area or cold storage room or the like, and a warm area, e.g. a heated indoor area, the pultruded element may constitute a thermal bridge between the cold area and the warm area. A thermal bridge occurs when a supporting beam or frame between a cold area and a warm area conducts a significant amount of heat away from the warm area when compared to properly insulated areas of the building structure. As an example, a frame of an insulated dual or triple window pane made entirely of pultruded reinforced fibre composite material will have a thermal conductivity being about five times higher than the conductivity between the window panes. Thus, the excellent thermal properties of the insulated window are compromised by using less than optimally insulated frames. Similarly, the insulated area between an inner wall and an outer wall may be compromised by using a support beam of a thermally conductive material. However, typical insulating materials such as foams have very low load-bearing capabilities. There is thus a need for methods and systems for manufacturing beams and frames with both high load-bearing capabilities and high insulation properties.

US2007/0013096 discloses a composite article having an outer skin layer and an inner foam layer. The above document further describes a method for continuously forming the composite article. The method includes a first stage in which the skin layer is impregnated, a second stage in which the foam layer is applied and a third stage comprising the curing of the foam and the skin.

Further prior art includes US4994309 disclosing an insulation spacer located between two glazing sheets, EP1637685 disclosing a composite window frame assembly, US5996297 disclosing an insulated connector for connecting two structural layers, WO2009/005515 disclosing an insulated panel having a rigid foam core, US4121008 disclosing a sandwich construction including an inner stress carrying foam layer, US3246058 disclosing a method of producing reinforced laminate foamed structures, US5344685 disclosing a foam core of random structure, US4469733 disclosing a foam sandwich construction having load-bearing foam core, US2006/0150577 disclosing a spacer assembly between two glass sheets having a long diffusion path, US5890289 disclosing a method of making a hollow insulated spacer, US6192651 disclosing a foam filled mounting bar, and US2004/0079047 disclosing a spacer having a lengthened thermal path

Yet further related prior art includes: FR2861764A1, EP15243380A1, WO05033459A2, JP2005105731A2, JP2005076302A2, DE10316153A1, JP2004232317A2, EP1431471A2, WO04001154A1, CA2415171AA, WO03038365A1, GB2378972A and GB2375553A. All of the above US documents are hereby incorporated by reference.

However, it has been noted that fibre reinforced elements or profiles comprising an embedded insulation layer and a fibre reinforced layer have the disadvantage that the structural load-bearing properties of the insulation layer are significantly lower than the structural load-bearing capabilities of the fibre reinforced layer It is therefore an object of the present invention to provide techniques for the dimensioning and the production of pultruded fibre reinforced elements having embedded volumes of insulating material so that both the load-bearing capabilities as well as the insulation properties are optimised while keeping the weight and volume of the pultruded fibre reinforced elements as low/small as possible.

It has been further noted that the transition between the fibre reinforced layer and the insulation layer constitutes a structurally weak area which may easily delaminate when subjected to external forces It is therefore a further object of the present invention to provide techniques for producing a pultruded fibre reinforced element or profile with a stronger bonding between the fibre reinforced layer and the insulation layer..

It is a feature of the present invention to provide a novel technique of manufacturing a multilayer fibre reinforced structure including insulating materials, which optionally may comprise polyester based insulating foams or similar components, for use in e.g. glazed window frames and thereby providing 1) a high degree of integration between the reinforcing fibres and the insulating material and at the same time 2) distributing the insulation material and reinforcing fibres within the structural element so that an advantageous stress distribution is achieved within the fibre reinforced structure

It is an advantage of the present invention that the novel technique according to the present invention provides a light weight fibre reinforced structural element with improved transmission of force and impact to and from the fibre reinforced structure thereby allowing a reduction of the size of the fibre reinforced structural element, i.e. providing a reduction of the weight of the fibre reinforced structural element or in the alternative a reduction of the materials used for the fibre reinforced structural element.

The above object, the above features and the above advantage together with numerous other objects, advantages and features which will be evident from the below detailed description of the present invention are according to a first aspect of the present invention obtained by a method of dimensioning and producing a fibre reinforced structural element including reinforcing fibres and defining a longitudinal direction coextensive with the overall orientation of said reinforcing fibres of said fibre reinforced structural element, said fibre reinforced structural element defining a specific cross-section configuration defining a transverse direction perpendicular to said longitudinal direction, said transverse direction being coextensive with the overall heat transmission direction through said fibre reinforced structural element when said fibre reinforced structural element is positioned in its intentional position in a load-bearing application in a building structure, said method comprising:
i) establishing a stress distribution along said transverse direction of said fibre reinforced structural element,
ii) establishing locations of higher stress along said transverse direction within said fibre reinforced structural element as compared to the average stress along said transverse direction by using said stress distribution,
iii) establishing locations of lower stress along said transverse direction within said fibre reinforced structural element as compared to the average stress along said transverse direction using said stress distribution,
iv) providing said reinforcing fibres defining said longitudinal direction coextensive with the overall orientation of the reinforcing fibres of said reinforcing fibres, an insulating material having a thermal conductivity lower than the thermal conductivity of said reinforcing fibres and an impregnation material being polymeric and curable, said fibres and said materials being mutually compatible,
v) providing a pultrusion assembly
vi) introducing said reinforcing fibres, said insulating material and said impregnation material into said pultrusion assembly for establishing:
   a) higher concentrations of said reinforcing fibres at said locations of higher stress along said transverse direction as compared to the average concentration of reinforcing fibres along said transverse direction,
   b) lower concentrations of reinforcing fibres at said locations of lower stress along said transverse direction as compared to the average concentration of reinforcing fibres along said transverse direction,
   c) larger volumes of said insulating material at said locations of lower stress along said transverse direction as compared to the average amount of insulating material along said transverse direction, and,
   d) smaller volumes or no volume of said insulating material at said locations of higher stress along said transverse direction as compared to the average amount of insulating material along said transverse direction, and,
vii) impregnating said reinforcing fibres by said impregnation material and subsequently curing said impregnation material

The fibre reinforced structural element may be a window frame, a beam or a plate to be used in a building structure or the like.. The fibre reinforced structural element defines the longitudinal direction which is coextensive with the overall orientation of the reinforcing fibres, which in turn is coextensive with the pultruding direction of the pultruding assembly. The reinforcing fibres may be provided as a bundle of fibre strands or as a web. In case of a web, it may be woven or non-woven. The intentional position of the fibre reinforced structural element should be construed to be the installed position as e.g. a beam or frame in the finished building structure in which position a downwardly oriented gravitational force is applied to the fibre reinforced structural element. The gravitational force originates from the weight of the fibre reinforced structural element itself, an overlying part of the building structure which rests on the fibre reinforced structural element and any persons or objects resting on this overlying part of the building structure. The gravitational force causes stress within the fibre reinforced structural element. External forces, such as wind, may cause forces in other directions to be applied to the building structure.

The applied gravitational force and the other forces such as wind forces apply stress within the fibre reinforced structural element, which stress also depends on how the fibre reinforced structural element is positioned relative to underlying support structures. Preferably, the overall orientation of the reinforcing fibres coincide with the main direction of stress within the reinforced structural element when positioned in its intentional position in a load-bearing application.

Typically, the reinforced structural element is positioned in the building structure so that the longitudinal direction, i.e. the direction coextending with the overall orientation of the reinforcing fibres, constitutes either a vertical direction or a horizontal direction. In case the longitudinal direction constitutes a vertical direction, the main portion of the stress will be applied in the form of a compression force in the vertical direction and thus coincides with the overall orientation of the reinforcing fibres In addition, a bending force may be applied in the horizontal direction due to e.g. the wind.. Conversely, in case the longitudinal direction constitutes a horizontal direction, the main stress will be applied in the form of a bending stress in the vertical direction

The intentional position of the reinforced structural element is a position between a cold area and a warm area in which the reinforced structural element is subjected to a temperature difference along the transverse direction which is perpendicular to the longitudinal direction. The transverse direction will typically be perpendicular to both the longitudinal direction and the direction of the applied stress. Other configurations are possible as will be understood by a skilled practitioner..

The stress within the fibre reinforced structural may vary both along the transverse direction and the longitudinal direction. In the transverse direction, the fibre reinforced structural element defines a transverse plane defining the specific cross-sectional configuration, which is identical along the longitudinal direction due to the predetermined shape of the die used in the pultrusion assembly for the entire pultrusion process. Thus, the concentration of reinforcing fibres will be equal along the longitudinal direction. Thus, the total amount of reinforcing fibres should be chosen to withstand the maximum applicable stress including safety margins etc Typically, the transverse direction is chosen at a location of maximum stress along the longitudinal direction.

The stress distribution along the transverse direction may preferably be theoretically derived by performing stress calculations, preferably using a computer and suitable 2D or 3D FEM simulation software. Alternatively, experiments may be performed on a building model or on a full-sized building using strain gauges or the like. Yet alternatively, the stress distribution may be derived empirically by using prior experience or guidelines available within the technical field of civil engineering..

The locations of higher stress are typically locations which support heavy objects such as a panel or another structural element.. The panel may be e.g. a glazing sheet or a wall panel. Locations of higher stress may also be locations which transmit stress to other locations and structures. The locations of lower stress are typically locations which only support themselves or which in addition to supporting themselves support only minor loads such as insulation.. The location of either higher stress or lower stress compared to the average stress along the transverse direction is established from the stress distribution along the transverse direction. The stress distribution along the longitudinal direction must not be derived since it will not influence the concentration of the reinforcing fibres as stated above Stress distribution along the transverse direction will for most applications be interchangeably high and low stress, since the transverse direction typically features layers of structural elements and insulation. The average stress may therefore be calculated as a simple arithmetic mean.

The shape of the die of the pultrusion assembly determines the specific cross-section of the fibre reinforced structural element The specific absolute cross-section of the fibre reinforced structural element at a specific point along the transverse direction depends on the thickness required to sustain the maximum allowable stress fibres along the transverse direction and the width required to span the distance between the cold area and the warm area, i.e. the thickness of the structural panels and insulation.. Further, the total amount of insulation along the transverse direction should be sufficient to significantly reduce the thermal conductivity of the reinforced structural element. Thus, to achieve a well proportioned fibre reinforced element, the insulation material is prefereably located at the locations along the transverse direction which constitute low stress locations and consequently includes a low concentration of reinforcing fibres. Conversely, at locations of high stress, a small volume or preferably no volume of insulation material is used, since the insulation material does not significantly contribute to the load-bearing capabilities of the fibre reinforced structural element. The reinforcing fibres are preferably introduced into the pultrusion assembly according to the established concentrations. The impregnation material constitutes the matrix material which typically is provided in the form of a resin.

According to a further embodiment of the method according to the first aspect, said impregnation material is based on polyurethane (PUR), polyisocyanurat (PIR) or epoxy. The above materials constitute materials which are suitable for the above purposes.

According to a further embodiment of the method according to the first aspect, said reinforced fibres are based on glass fibres, aramid fibres, natural fibres or thermoplastic fibres. The above materials constitute materials which are suitable for the above purposes.

According to a further embodiment of the method according to the first aspect, said insulating material comprises sheets of glass fibres, aramid fibres, natural fibres or thermoplastic fibres, or alternatively, said insulating material comprises a foamable polymeric material, preferably comprising said impregnation material and a foaming agent. The insulation material may be provided in the form of a solid plate of insulation material, e.g. insulating foam or insulating web material or mineral insulation. The solid plate is introduced into the pultruding assembly together with the reinforcing fibres which enclose the solid plate. Alternatively, the impregnation material is foamable, e.g. by inclusion of a foam promoting agent, and the foam is generated in an enclosed space between layers of reinforcing fibres.

According to a further embodiment of the method according to the first aspect, said reinforced fibres are provided in the form of a woven or non-woven web. As an alternative to a bundle of fibre strands, a web, which may be woven or non-woven, may be used. The web should still exhibit an overall fibre orientation in the longitudinal direction, i.e. in the pultruding direction.

According to a further embodiment of the method according to the first aspect, steps i), ii) and iii) are performed on a digital representation of said building structure using a computer. Preferably, the establishing of the stress distribution along the transverse direction, the establishing of locations of higher stress along the transverse direction and the establishing of locations of lower stress along the transverse direction are performed using a computer and a digital representation of the building element. The digital representation may be established using CAD and FEM software, and the locations of higher stress and lower stress may be derived using the FEM software. The digital representation may be in the form of a 1D model, a 2D model or a 3D model.

The above object, the above features and the above advantage together with numerous other objects, advantages and features which will be evident from the below detailed description of the present invention are according to a second aspect of the present invention obtained by a fibre reinforced structural element comprising:
reinforcing fibres defining a longitudinal direction coextensive with the overall orientation of the reinforcing fibres of said reinforcing fibres,
an insulating material having a thermal conductivity lower than the thermal conductivity of said reinforcing fibres, and
a cured polymeric impregnation material enclosing said reinforcing fibres, said fibres and said materials being mutually compatible, said fibre reinforced structural element defining a specific cross-section configuration defining a transverse direction perpendicular to said longitudinal direction, said transverse direction being coextensive with the overall heat transmission direction through said fibre reinforced structural element and defining a stress distribution when said fibre reinforced structural element is positioned in its intentional position in a load-bearing application in a building structure, said reinforcing fibres defining:
   higher concentrations at locations of higher stress according to said stress distribution along said transverse direction as compared to the average concentration of reinforcing fibres along said transverse direction, and
   lower concentrations at locations of lower stress according to said stress distribution along said transverse direction as compared to the average concentration of reinforcing fibres along said transverse direction,
said insulating material defining:
   larger volumes at locations of lower stress according to said stress distribution along said transverse direction as compared to the average amount of insulating material along said transverse direction, and,
   smaller volumes or no volume at locations of higher stress according to said stress distribution along said transverse direction as compared to the average amount of insulating material along said transverse direction

The above structural element according to the second aspect may preferably be manufactured using the method according to the first aspect..

According to a further embodiment of the fibre reinforced structural element according to the second aspect, said structural element defines an overall heat transfer coefficient U along said transverse direction of no more than 0.25 W·m⁻²·K⁻¹, preferably no more than 0.15 W·m⁻²·K⁻¹, more preferably no more than 0.10 W·m⁻²·K⁻¹. The heat transfer coefficient of glass, glass being the preferred material for the fibre strands, is about 1.0 W·m⁻²·K⁻¹ and the heat transfer coefficient of polymeric foam and other insulation materials is about 0.1 W·m⁻²·K⁻¹ or even less such as 0.01 W·m⁻²·K⁻¹. The above properties allow the overall heat transfer coefficient U of the fibre reinforced structural element to be significantly lower than the heat transfer coefficient of pure glass. This is due to the low concentration of fibres in the locations of low stress. The concentration of glass fibres in the high concentration locations may be up to about 60%, whereas the concentration of glass in the low concentration locations may be less than 10%

According to a further embodiment of the fibre reinforced structural element according to the second aspect, said specific cross-section configuration defines a first load-bearing portion having said higher concentrations of reinforcing fibres and said smaller volumes or no volume of insulating material, a second non-load-bearing portion juxtaposing said first load-bearing portion and having said lower concentrations of reinforcing fibres and said larger volumes of insulating material and, preferably, a third load-bearing portion juxtaposing said second non-load-bearing portion and having said higher concentrations of reinforcing fibres and said smaller volumes or no volume of insulating material. Typically, the reinforced structural element comprises two load-bearing portions having high fibre concentrations for supporting an outer wall and an inner wall, and, one non-load-bearing portion for supporting or at least covering an insulated space in between the inner wall and the outer wall.

According to a further embodiment of the fibre reinforced structural element according to the second aspect, said second non-load-bearing portion is thicker or alternatively thinner or alternatively equal in size to said first load-bearing portion. The thickness of the portions should be chosen according to the load-bearing and insulation requirements

According to a further embodiment of the fibre reinforced structural element according to the second aspect, said fibre reinforced material and said impregnating material are enclosing said insulating material. Preferably, the insulating material is enclosed by reinforcing material in order to maximise the structural stability of the fibre reinforced structural element. The word 'enclose' should in the present context be understood as enclosing in the transverse plane.

According to a further embodiment of the fibre reinforced structural element according to the second aspect, the volume of said reinforcing fibres and the volume of said impregnation material together form between 90% and 100%, preferably between 99% and 100%, of the total volume of said structural element at said locations of higher stress according to said stress distribution along said transverse direction To optimise the load-bearing capabilities, preferably no or only very little volumes of insulating material are present in the locations of high stress.

According to a further embodiment of the fibre reinforced structural element according to the second aspect, the volume of said insulation material form between 80% and 99%, preferably between 90% and 95% of the total volume of said structural element at said locations of lower stress according to said stress distribution along said transverse direction.. To optimise the insulation capabilities, preferably only very small concentrations of fibre material are present in the locations of low stress.

The above object, the above features and the above advantage together with numerous other objects, advantages and features which will be evident from the below detailed description of the present invention are according to a third aspect of the present invention obtained by a building structure comprising a fibre reinforced structural element according to the second aspect and applied in a load-bearing application in said building structure

The building structure according to the third aspect is preferably made up of structural elements according to the second aspect..

According to a further embodiment of the building structure, said building structure comprises an outer upper panel, an outer lower panel, an inner upper panel and an inner lower panel, all panels being adhered to said locations of higher concentrations of fibres.

Preferably, the structural element is oriented horizontally in the building structure, which building structure includes panels, e.g. glazing sheets or walls, above and below the structural element. The panels may be adhered to the structural element.

In the present context, the technique defined as pultrusion is to be considered comprising any technique resembling the technique conventionally known as pultrusion involving the pulling of reinforcing fibres or layers through an extrusion die and involving the utilisation of thermosetting resins and further equivalent techniques such as co-extrusion / pultrusion, extrusion of fibre reinforced thermoplastic materials or a technique known as pulforming in which a pre-cast or pre-extruded polymer body is formed into a specific shape by pulling the pre-cast or pre-extruded element or body.. Consequently, it is to be understood that any technique covered by the above terms or equivalent techniques comprising continuous, semi-continuous or intermittent production of elements, such as the plate elements according to the present invention are to be construed equivalent to the pultrusion technique described in the present specification.

### BRIEF DESCRIPTION OF THE DRAWINGS

Fig. 1A is a perspective view of a pultrusion assembly using a solid insulation material inserted between two impregnated fibre bundles.
Fig. 1B is a perspective view of a pultrusion assembly using a liquid matrix material applied in between two fibre bundles.
Fig. 1C is a perspective view of a pultrusion assembly in which liquid matrix material is introduced through the bundles of reinforcing fibres.
Fig. 2A is a cut out view of the pultrusion assembly as shown in Fig 1A.
Fig.. 2B is a cut out view of the pultrusion assembly as shown in Fig 1B.
Fig.. 2C is a cut out view of the pultrusion assembly as shown in Fig 1C.
Fig. 2D is a cut out view of the pultrusion assembly using a hollow mandrel for introducing matrix material.
Fig. 2E is a cut out view of the pultrusion assembly using a hollow mandrel for introducing foam promoting agents.
Fig. 3A is a perspective view of a pultrusion assembly including fibre bundles having local integrated foam promoting agents.
Fig.. 3B is a perspective view of a pultrusion assembly including mandrels and a non linear shaped outlet for producing non-uniform profiles.
Fig. 4A-F is a series showing fibre reinforced structural elements having increased insulation properties together with corresponding plots showing heat transfer coefficients and load-bearing capabilities along a transverse direction.
Fig 5A-B are views of a building structure in the form of a window frame according to the prior art.
Fig 6A-B are views of a building structure in the form of a window frame according to the present invention.

### DETAILED DESCRIPTION OF THE DRAWINGS

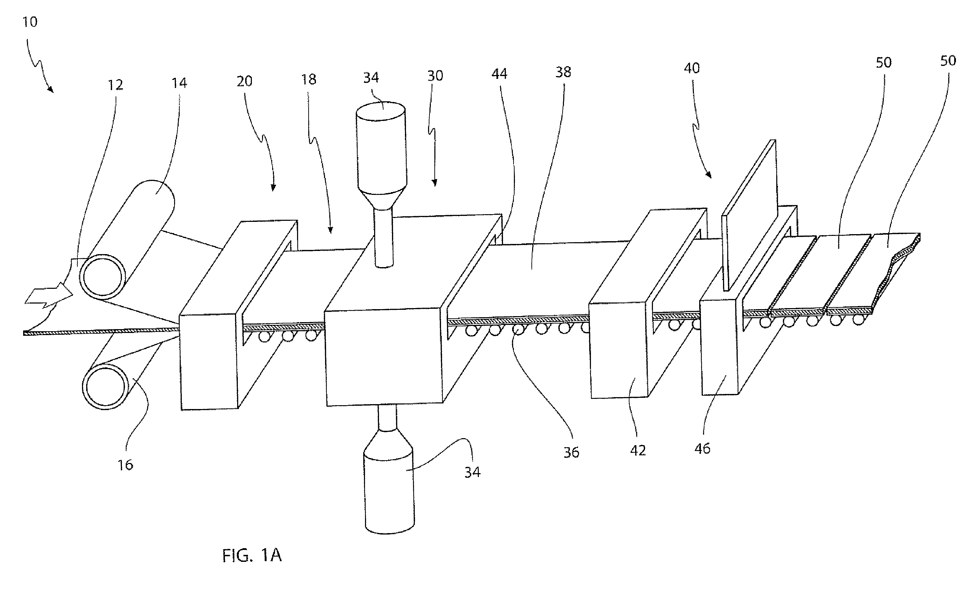

Fig. 1A is a partly sectional, perspective and schematic view of a first embodiment of a pultrusion apparatus, designated the reference numeral 10 in its entirety, in which a fibre reinforced, resin hardened structural element is produced The pultrusion assembly 10 comprises three consecutive sections constituting a receiving section 20, a curing section 30, and a pulling section 40. A plate element 12 is introduced into the receiving section 20 together with a plurality of reinforcing fibres constituting fibre webs or bundles of reinforcing fibre strands having an overall orientation coextending with the pultrusion direction and designated the reference numerals 14 and 16. The plate element 12 constitutes a solid insulating plate made up of e.g. solidified plastic foam, aerogel or the like The pultrusion assembly 10 is continuously operated so as to cause a solid insulating plate element 12 which is introduced into the receiving section 20 to be moved from the left hand side of Fig. 1A to the right hand side of Fig. 1A as indicated by the arrow. The plate element 12 is thereby reinforced and encapsulated in an integral pultrusion process serving to combine the insulation properties of the plate element 12 and the advantageous load-bearing properties inherent to the fibre reinforced structural element.. The sections 20, 30 and 40 are shown as being separate elements in Fig. 1A, however, they may also be build into a single continuous structure.. In the receiving section 20, the plate element 12 and the reinforcing fibre bundles 14 and 16, respectively..

The impregnated fibre assembly 18 is subsequently introduced into the curing section 30. In the curing section 30, the plate element 12 is embedded with the reinforcing fibre bundles 14 and 16, respectively, and soaked in a resin constituting a matrix material. The resin constitutes a liquid and heat curable resin and is introduced from a resin reservoir 34. The plate element 12 and the impregnated reinforcing bundles 14 and 16 form an impregnated fibre assembly 18. The matrix material is forced into the reinforcing fibre bundles 14, 16, causing a pressurized saturation of the reinforcing fibre bundles 14 16. The impregnated fibre assembly 18 is subsequently subjected to an elevated temperature. The heat curable matrix material is then caused to solidify or harden near the outlet 44 of the curing section 30, forming a continuous fibre reinforced profile 38.

From the outlet 44 of the curing section 30, the cured reinforced profile 38 is, via roller conveyor 36, introduced into the pulling section 40 comprising a puller 42 for pulling the cured continuous fibre reinforced profile 38 through the pultrusion assembly 10 and a cutter 46 for separating the continuous fibre reinforced profile 38 into distinct fibre reinforced profiles 50, hereafter referred to as fibre reinforced structural elements.

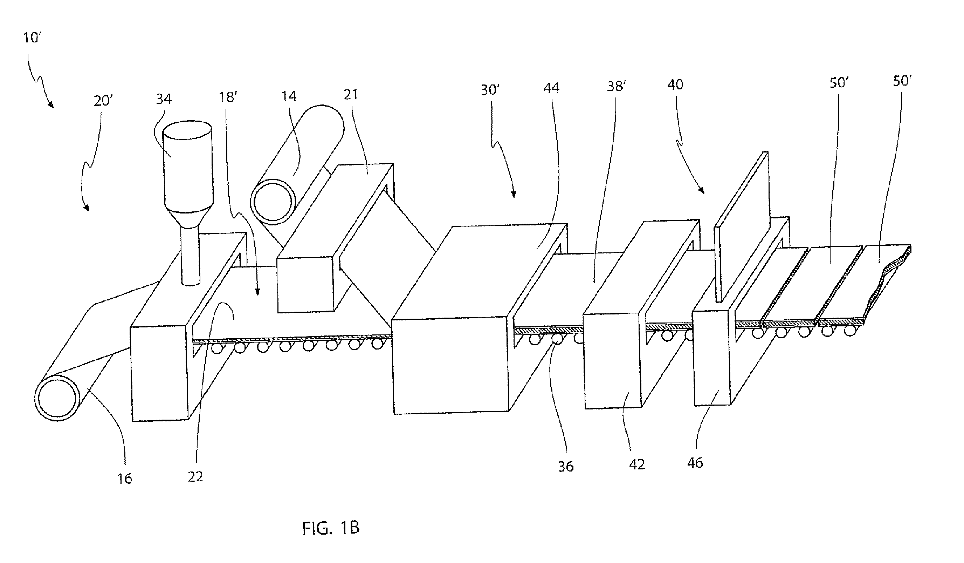

Fig. 1B shows a pultrusion assembly '10', similar to the pultrusion assembly 10 of Fig. 1A except that no plate element is used. In the present pultrusion assembly 10', a lower fibre bundle 16 is introduced into the receiving section 20'. The lower fibre bundle 16 is continuously provided from a roll and has an overall fibre orientation in a longitudinal direction, which corresponds to the pultrusion direction, i.e. from the left to the right in the figure. The receiving section 20' comprises a resin reservoir 34 for applying a layer of matrix material or resin such as polyurethane (PUR), polyisocyanurat (PIR) or epoxy evenly onto the lower fibre bundle. The fibres used are typically glass fibres, however, also the use of aramid fibres, natural fibres, or thermoplastic fibres is equally feasible.. Also hollow fibres may be used. Hollow fibres have higher thermal insulation capabilities, however, hollow fibres may have a lower structural stability. The receiving section 20' thereby forms an impregnated assembly 18' comprising the lower fibre bundle 16 and an evenly applied layer of matrix material 22.

An upper fibre bundle 14, which is identical to the lower fibre bundle 16, is continuously supplied from a roll into a further receiving section 21. In the further receiving section 21, the upper fibre bundle 14 is optionally impregnated by a foam promoting agent.

Subsequently, the impregnated assembly 18' is conveyed into a curing section 30' together with the upper fibre bundle 14. The upper fibre bundle 14 is applied so that the matrix material 22 is located between the lower fibre bundles 16 and the upper fibre bundle 14. The impregnated fibre assembly 18' is introduced into the curing section, which applies heat onto the resin and fibre assembly 18' in order to expand and cure the matrix material 22, thereby producing a continuous fibre reinforced profile 38'. The fibre reinforced profile 38' is further conveyed to a pulling and cutting section 40, 46 as explained in Fig. 1A.

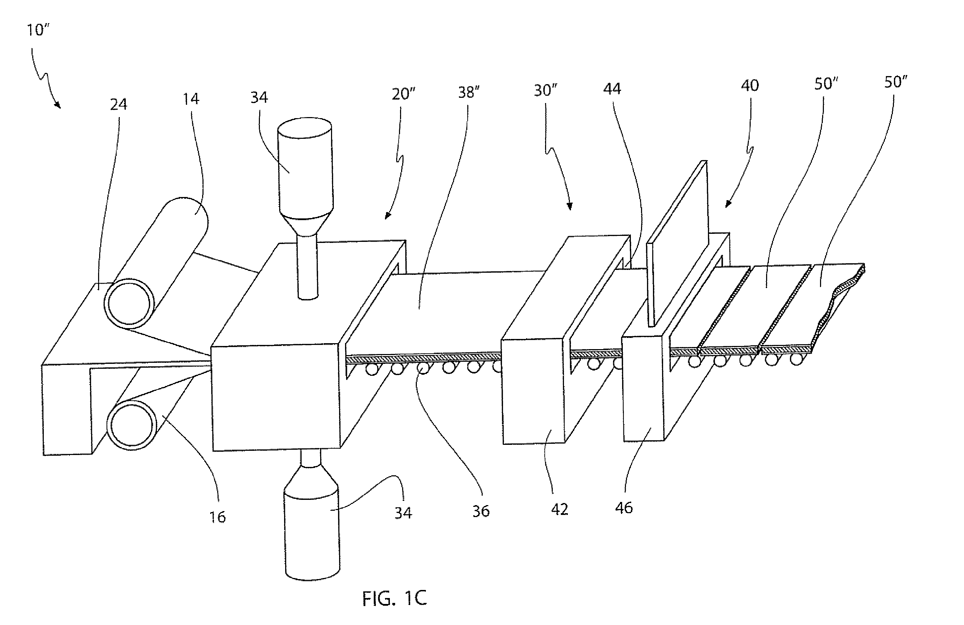

Fig. 1C shows a pultrusion assembly 10" including a mandrel 24. The mandrel 24 is introduced into the receiving section 20" between the lower fibre bundle 16 and the upper fibre bundle 14 in order to establish a fixed spacing between the bundles 14, 16. The receiving section 20" comprises two opposite resin reservoirs, both designated the reference numeral 34, for introducing matrix material into the fibre bundles 14, 16 in a direction from the outside and inwardly towards the mandrel 24, thereby producing an impregnated fibre assembly 38".

The continuous fibre reinforced profile 38" is conveyed towards a curing section 30" for expanding and curing the matrix material and producing a fibre reinforced profile 38". The fibre reinforced profile 38" is subsequently conveyed to a pulling and cutting section 40, 46 as described above.

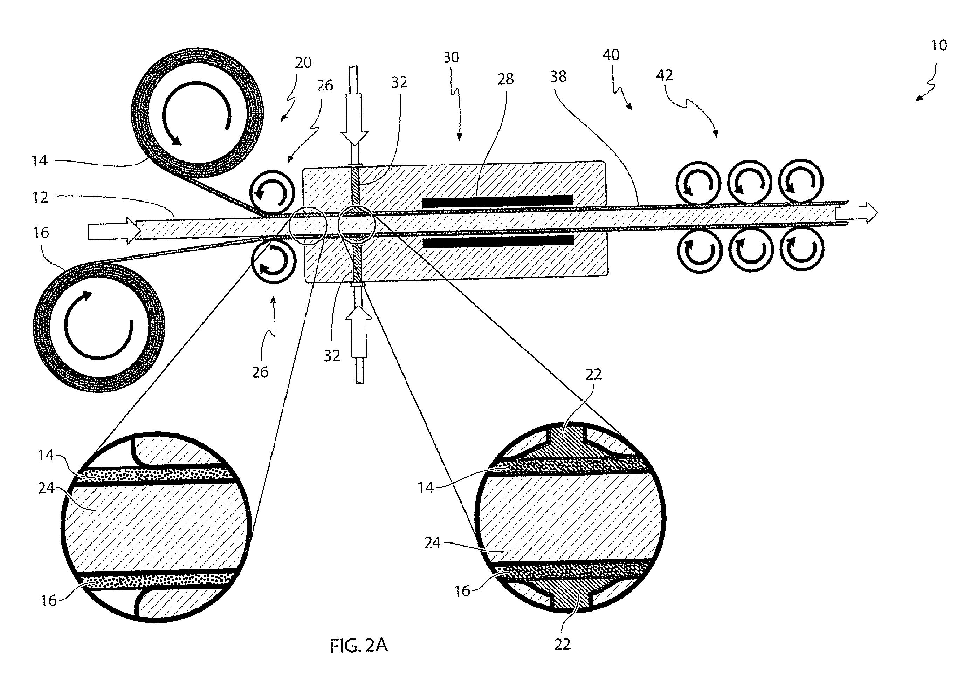

Fig. 2A shows a cut out view of the pultrusion assembly 10 as previously described in connection with Fig. 1A. The plate element 12 is introduced into the front part of the receiving section 20, thereby separating the upper and lower fibre bundles 14, 16 The upper and lower fibre bundles are held adjacent the plate element 12 by opposing rollers 26. The left close-up view of Fig. 2A shows the upper and lower fibre bundles 14, 16 when entering the receiving section 20 on opposite sides of the plate element 12. The right close-up view of Fig. 2A shows the impregnation of the upper and lower fibre bundles by introducing resin in an inwardly direction from the outside towards the plate element 12 by using oppositely oriented nozzles 32' having respective diverging and opposing ends 33. The resin 22 is thereby introduced by high pressure applied onto a large surface and towards the mandrel 24 in order to ensure that the upper and lower fibre bundles 14, 16 are soaked by resin and thereby impregnated

Foaming inside the upper and lower fibre bundles 14, 16, is prevented due to the high concentration of fibres which causes any bubbles which may form to collapse. The outer surfaces of the upper and lower fibre bundles 14, 16 are therefore flat and sooth Finally, the completed fibre reinforced profile 38 is pulled out of the curing section by pullers 42 in the form of opposing rollers.

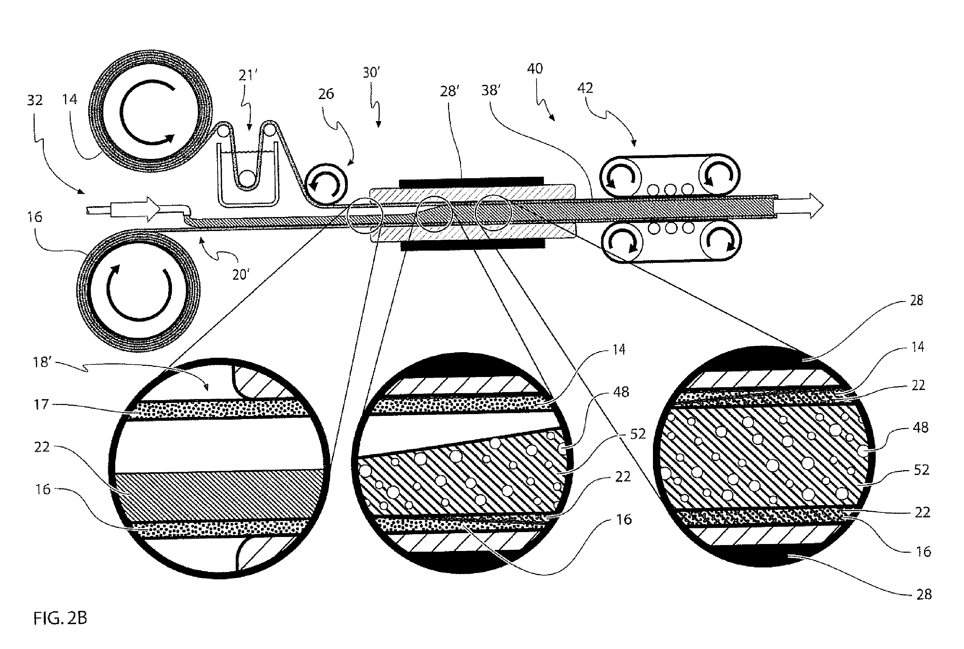

Fig. 2B shows the schematic cut out view of the pultrusion assembly 10' of Fig. 1B. The matrix material 22 is shown to be applied evenly onto the lower fibre bundle 16 by a resin nozzle 32. The resin nozzle 32 forms part of the receiving section 20'. The upper fibre bundle 14 is conveyed via a further receiving section 21', constituting a bath of foam promoting agent. The impregnated assembly 18', constituting the lower fibre bundle 16, the matrix material 22 resting on the lower fibre bundle 16 and the upper fibre bundle 14 spaced apart from the lower fibre bundle, are guided into the curing section 30' by a roller 26. The left close-up view shows the entrance of the curing section 30' and the impregnated assembly 18' when entering the curing section 30'. The upper fibre bundle 14, which is initially non-impregnated, is introduced into the curing section 30' spaced apart from the matrix material 22.

The curing section 30' includes a heater 28' for increasing the temperature within the impregnated assembly 18' The heater 28' is typically an electrical heater.. In the present embodiment, the heater 28' is applied on the outside of the curing section 30'. The heat applied causes at least some of the matrix material 22 to expand and generate a foam 52 as shown in the central close-up view of Fig. 2B. Alternatively, the matrix material 22 may be self foaming, i.e. foaming without the use of heat. As shown in the right close-up view, the foam 52 subsequently expands further to fill the entire spacing between the upper fibre bundle 14 and the lower fibre bundle 16. The foam may be promoted by including a foam promoting agent (not shown) into the matrix material. The foam promoting agent (not shown) may be e.g. water. The increased pressure caused by the foaming, i.e. the formation of small bubbles 48 in the matrix material 22, causes some of the liquid matrix material remaining between the upper fibre bundle 14 and the lower fibre bundle 16 to enter and impregnate the upper and lower fibre bundles 14, 16. The matrix material or the foam 52 entering the upper or lower fibre bundles 14, 18 will cure and form a solid skin at the outer surfaces of the upper or lower fibre bundles 14, 16. At the right end of the curing section, the heat is increased in order to initiate the final curing and solidification of the foam 52 and the resin 22 forming the fibre reinforced profile 38', which proceeds to the puller 42 of the pulling and cutting section 40, 46. The puller 42 is constituted by opposing conveyor belts, however, opposing rollers are equally feasible

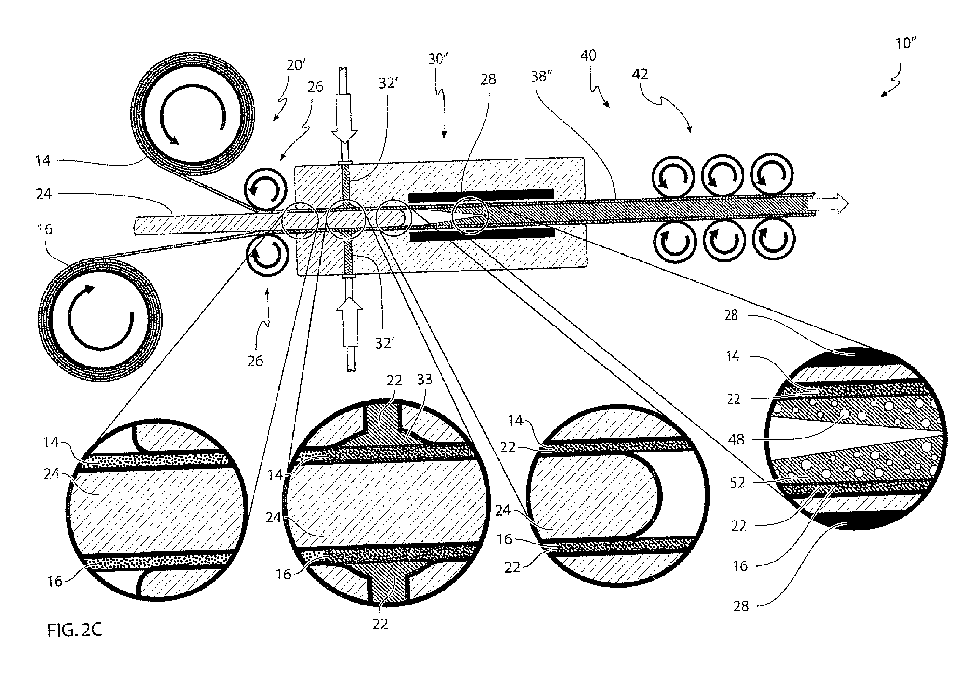

Fig. 2C shows a cut out view of the pultrusion assembly 10" as previously described in connection with Fig. 1C. The broad mandrel 24 is introduced into the front part of the receiving section 20", thereby separating the upper and lower fibre bundles 14, 16. The upper and lower fibre bundles are held adjacent the mandrel 24 by opposing rollers 26. The leftmost close-up view of Fig. 2C shows the upper and lower fibre bundles 14, 16 when entering the receiving section 20" on opposite sides of the mandrel 24. The centre left close-up view of Fig.. 2C shows the impregnation of the upper and lower fibre bundles by introducing resin in an inwardly direction from the outside towards the mandrel 24 by using oppositely oriented nozzles 32' having respective diverging and opposing ends 33. The resin 22 is thereby introduced by high pressure applied onto a large surface and towards the mandrel 24 in order to ensure that the upper and lower fibre bundles 14, 16 are soaked by resin and thereby impregnated

The centre right close-up view of Fig. 2C shows the end of the mandrel 24 and the beginning of the heater 28. The rightmost close-up view shows the impregnated assembly 18 when heated, at which time the matrix material located at the inwardly facing surfaces of the upper and lower fibre bundles 14, 16 will start foaming and fill the close space in between the upper and lower resin bundles 14, 16 and the mandrel 24 with foam. Foaming inside the upper and lower fibre bundles 14, 16, is prevented due to the high concentration of fibres which causes any bubbles which may form to collapse. The outer surfaces of the upper and lower fibre bundles 14, 16 are therefore flat and smooth. Finally, the completed fibre reinforced profile 38 is pulled out of the curing section by pullers 42 as described above.

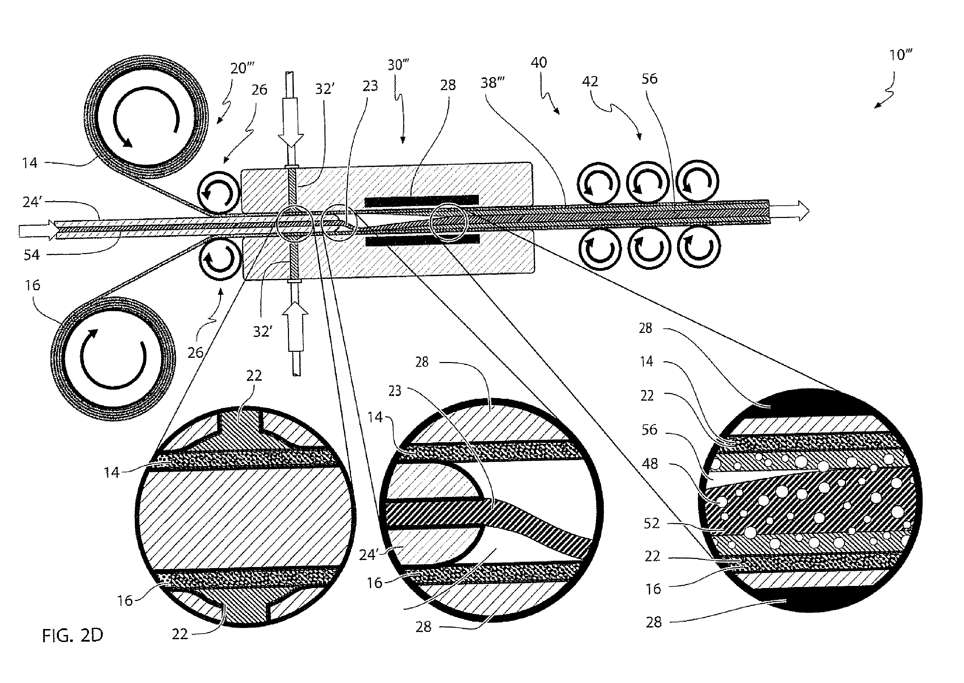

Fig. 2D shows a pultrusion assembly 10"' similar to the pultrusion assembly 10" described before in connection with Fig 2C except that the mandrel 24' is hollow and is used for introducing further matrix material 23 into the upper and lower fibre bundles 14, 16. The further matrix material 23 may be identical to the matrix material 22 introduced via the nozzles 32. The further matrix material 23 will then foam when subjected to heat and fulfils the purpose of ensuring that the spacing in-between the upper and lower fibre bundles 14, 16 is filled by matrix material and/or foam. Alternatively, the further matrix material 23 may be a solidifying material for generating a solid core, or yet alternatively a different matrix material which generates either more or less foaming compared to the foaming generated by the first matrix material 22.

Fig.. 2E shows a pultrusion assembly 10'" similar to the pultrusion assembly 10" described before in connection with Fig. 2C except that the mandrel 24" is hollow and is used for introducing foam promoting agents 54, e.g. foam initiator or foaming agent, into the upper and lower fibre bundles 14, 16. The mandrel 24" has two outlets oriented towards the upper and lower fibre bundles 14, 16, respectively. The foam promoting agent 54 is promoting or causing the foaming of the matrix material. In case no foam promoter 54 is introducted by the mandrel 24" into the upper and lower fibre bundles 14, 16, no significant foaming will occur, all matrix material will remain within the fibre bundles 14, 16 and a cavity will form between the upper and lower fibre bundles 14, 16. In case the foam promoter 54 is introduced into the matrix material, the foam will generate similarly to the previously presented embodiment of Fig. 2B. The foam promoting agent 54 may e.g. constitute water which, when heated, will form water vapour which causes bubble formation and thereby foaling The present embodiment may be used for achieving a local foaming in the transverse direction.

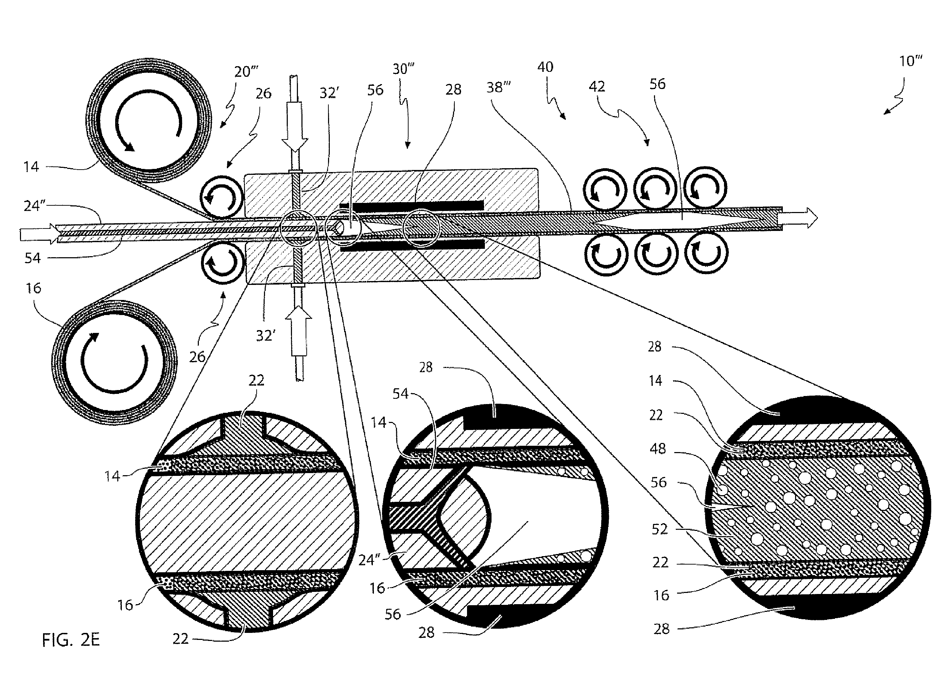

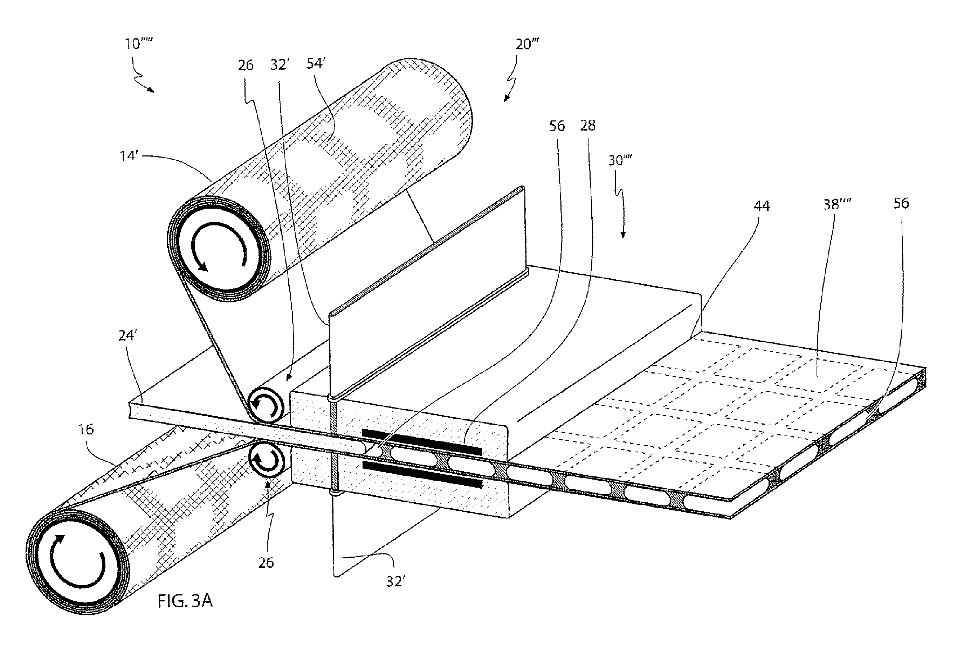

Fig. 3A shows a perspective view of a pultrusion assembly 10"' similar to the assembly 10" of fig 2C, however which features upper and lower fibre bundles 14', 16', having a foam promoting agent 54' printed on their inwardly oriented surfaces. The effect of local foaming will be similar to the previous embodiment of Fig. 2E. In the present embodiment, the non printed areas form squares which, when impregnated and heated will not initiate foaming and thus form cavities 56 in-between the foamed parts of the profile 38"". The cavities 56 may optionally be filled by solid insulation which may be supplied via the mandrel 24 similar to Fig 2D Alternatively, the cavities 56 may be filled by talcum and/or PCM material.

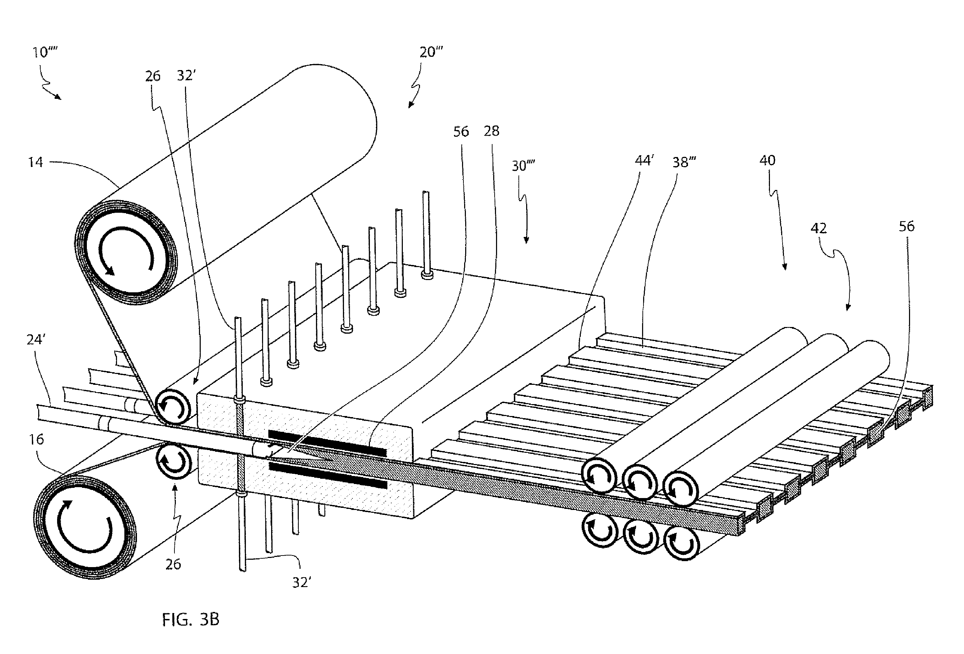

Fig. 3B shows a perspective view of a pultrusion assembly 10"", similar to the previous embodiment shown in connection with Fig 3A, however, instead of a single broad mandrel, a plurality of parallel mandrels 24' is used. The fibre reinforced profile 38" produced by the pultrusion assembly 10"' will exhibit cavities 56, in which no foaming has occurred. The present embodiment may be used for achieving a local foaming.

By using a non-even outlet 44' of the curing section defining wider opening at locations of foaming and smaller openings at locations of non-foaming, a non-flat profile 38' may be produced. In the present case, at the location of cavities in which no foam is generated, the impregnated upper and lower fibre bundles 14, 16 are pressed together forming a compact or non-expanded section without any cavity. The produced fibre reinforced profile will have interchangeably expanded and non expanded sections in the transverse direction.

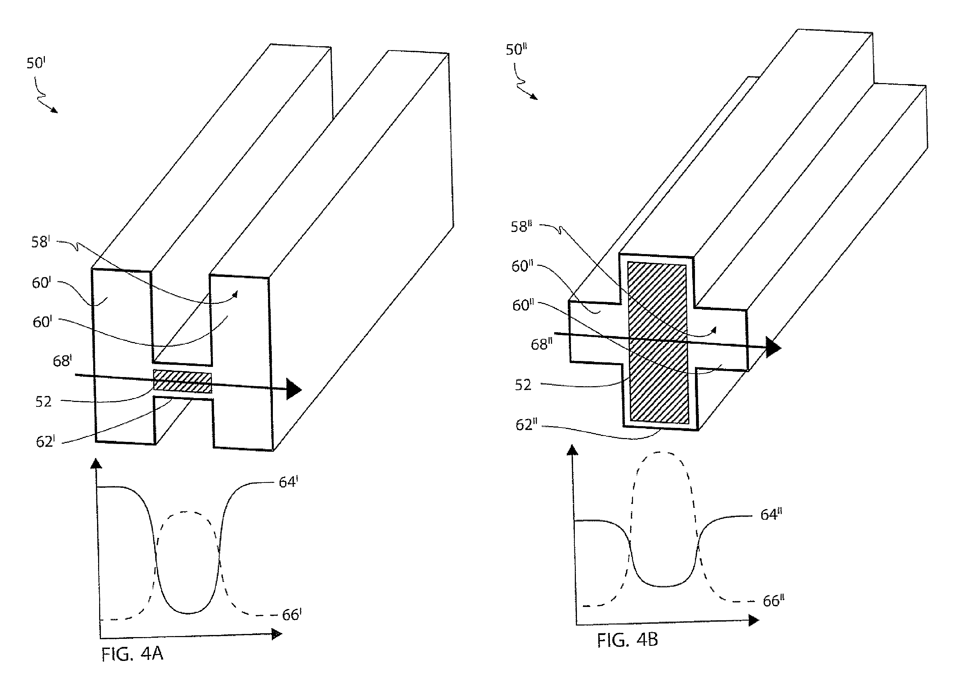

The outlet may have other shapes in order to produce a variety of shaped profiles The fibre bundles 14, 16 may have a non-even shape to correspond to the desired cross-sectional configuration of the fibre reinforced profile. In Fig. 4A-F, some examplatory shapes are presented. It is to be understood that alternative configurations are feasible , e.g. a curing section defining wider opening at locations of non-foaming and smaller openings at locations of foaming.

Fig. 4A shows a first embodiment of a fibre reinforced structural element constituting a fibre reinforced profile 50^{I} having a cross-section configuration 58^{I} resembling a letter H. The profile 50^{I} includes two compact non-foamed sections 60^{I} having a high concentration of reinforcing fibres and one foamed section 62^{I} interconnecting the two non-foamed sections 60 having a low concentration of reinforcing fibres. Below the profile 50^{I}, a plot has been made showing the load-bearing capability 64^{I} and the thermal insulating capabilities 66^{I} along a transverse direction 68^{II} on the cross-section 58^{I}. As can be seen in the plot, at the locations of higher concentration 60 of reinforcing fibres compared to the average concentration of reinforcing fibres, the load-bearing capabilities are high due to the high amount of fibres and the thermal insulating capabilities are low due to the non-presence of insulation material.. Conversely, at the locations of lower concentration 62^{I} of reinforcing fibres compared to the average concentration of reinforcing fibres, the load-bearing capabilities are low due to the low amount of fibres and the thermal insulating capabilities are high due to the presence of high amounts of foam 52.

Fig. 4B shows a similar profile 50^{II} having a cross-shaped cross-section. The profile 50^{II} includes two compact non-foamed sections 60^{II} having a high concentration of reinforcing fibres and one foamed section 62" having a low concentration of reinforcing fibres and interconnecting the two non-foamed sections 60^{II}. Compared to the previous embodiment of Fig 7A, the present embodiment has smaller non-foamed sections 60^{II} and a larger foamed section 62^{II}. Below the profile 50^{II}, a plot has been made showing the load-bearing capability 64^{II} and the thermal insulating capabilities 66^{II} along a transverse direction 68" on the cross-section 58^{II}. As can be seen, the present plot is similar to the previous plot, however, at the locations of higher concentration 60^{II} of reinforcing fibres compared to the average concentration of reinforcing fibres, the load-bearing capabilities are slightly lower than in the previous embodiment but still higher than in the foamed section 62", due to the lower concentration of reinforcing fibres compared to the previous embodiment. Conversely, at the locations of lower concentration 62^{II} of reinforcing fibres compared to the average concentration of reinforcing fibres, the thermal insulating capabilities are higher than in the previous embodiment due to the presence of higher amounts of insulation material 52 compared to the previous embodiment.

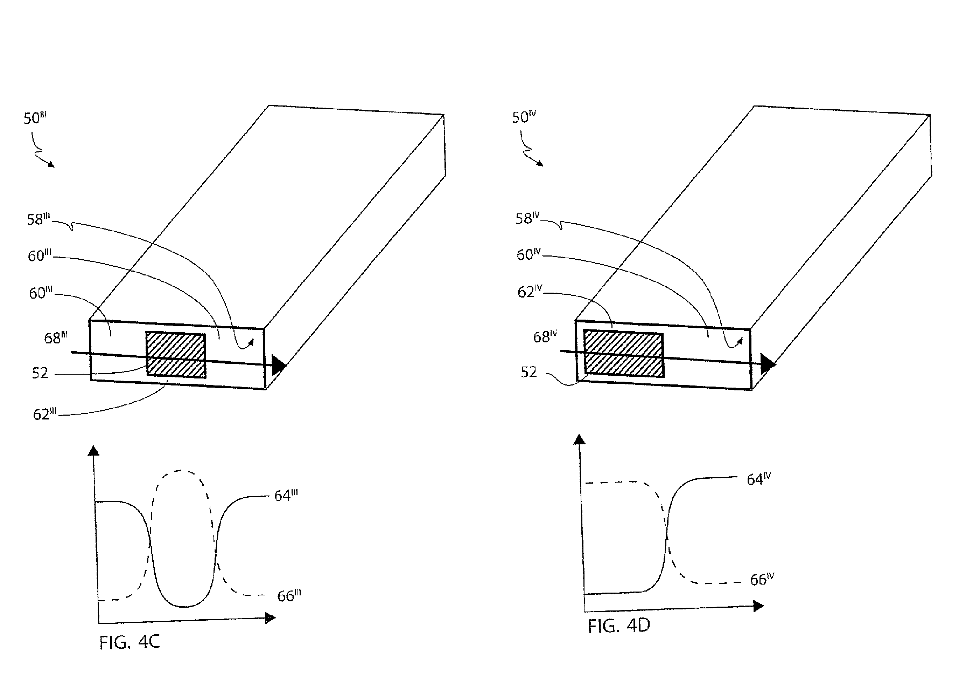

Fig. 4C shows a profile 50^{III} having a flat cross-section configuration The profile 50^{III} includes two compact non-foamed sections 60^{III} having a high concentration of reinforcing fibres and one foamed section 62^{III} interconnecting the two non-foamed sections 60 having a low concentration of reinforcing fibres Below the profile 50^{III}, a plot has been made showing the load-bearing capability 64 and the thermal insulating capabilities 66^{III} along a transverse direction 68^{III} on the cross-section 58^{III}. As can be seen in the plot, the present profile 50^{III} has thermal insulation properties and load-bearing properties being in-between the profile 50^{I} and profile 50^{II} presented in connection with Fig 7A and 7B, respectively.

Fig. 4D shows a profile 50^{IV} having a flat cross-section The profile 50^{IV} includes a single compact non-foamed section 60^{IV} having a high concentration of reinforcing fibres and one foamed section 62^{IV} having a low concentration of reinforcing fibres and being connected to the non-foamed section 60^{IV}. Below the profile 50^{IV}, a plot has been made showing the load-bearing capability 64 and the thermal insulating capabilities 66 along a transverse direction 68^{IV} on the cross-section 58^{IV}. As can be seen in the plot, the present embodiment of the profile 50^{IV} has a single section of high load-bearing capabilities and low insulation capability, and, a single section of low load-bearing capability and high insulation capability

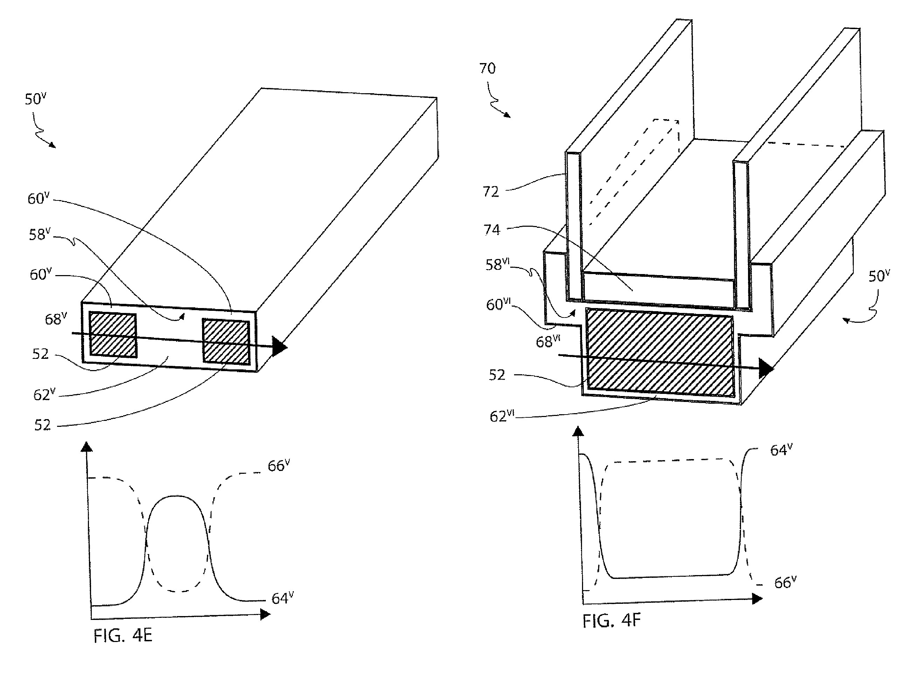

Fig 4E shows a profile 50^{V} having a flat cross-section. The profile 50^{V} includes two foamed sections 62^{V} having a low concentration of reinforcing fibres and single compact non-foamed section 60^{V} having a high concentration of reinforcing fibres and interconnecting the two foamed sections 62^{V}. Below the profile 50^{V}, a plot has been made showing the load-bearing capability 64^{V} and the thermal insulating capabilities 66^{V} along a transverse direction 68^{V} on the cross-section 58^{V}. As can be seen in the plot, the present embodiment has a single central section of high load-bearing capabilities and low insulation capability, and two outer sections of low load-bearing capability and high insulation capability

Fig. 4F shows a building element 70 comprising a pultruded profile 50^{V} onto which two oppositely oriented glass sheets 72 have been adhered. The pultruded profile 50^{VI} resembles the profile 50^{I} and 50^{II} presented in Figs. 7A and B in that a central insulated or foamed section 62^{VI} having a low concentration of reinforcing fibres is located in-between two non-foamed sections 60^{VI} having a high concentration of reinforcing fibres.. Each glass sheet 72 is adhered to a section of the pultruded profile 50^{VI} constituting a non-foamed section 60^{VI} and having a high concentration of reinforcing fibres The glass sheets 72 are spaced apart by a spacer 74.

Below the building element 50^{IV}, a plot has been made showing the load-bearing capability 64^{VI} and the thermal insulating capabilities 66^{VI} along a transverse direction 68^{VI} on the cross-section 58^{VI}. As can be seen in the plot, the present embodiment has two sections of high load-bearing capabilities and low insulation capability corresponding to the non-foamed section 60^{VI} onto which section the glass sheets 72 are adhered, and a single section of low load-bearing capability and high insulation capability corresponding to the foamed section 62^{VI} between the glass sheets and located below the insulated space 76. The insulated space 76 in-between the glass sheets may be filled with thermally insulating gas or alternatively, have a very low pressure for increasing the thermal insulation properties..

Thus, the structural load and any other forces such as wind which is applied onto or by the glass sheets 72 are transmitted to the non-foamed sections 60 onto which the glass sheets are adhered. The stress thus induced into the non-foamed sections is higher than the average stress in the building element 70. The stress may be calculated by a computer having FEM software or may alternatively be derived from experiments or empirically.. The non-foamed sections are designed to have an amount of reinforcing fibres and matrix material sufficient for withstanding the higher stress

The foamed section 60, on the other hand, has an amount of reinforcing fibres and matrix material sufficient for withstanding a stress being lower than the average stress in the building element, while having an amount of insulation material for achieving sufficient insulation properties and break any thermal bridge which would otherwise occur between the two non-foamed sections.. The overall thermal conductivity depends on the quality of insulation material and is typically also calculated by a computer having FEM software or may alternatively be derived from experiments or empirically..

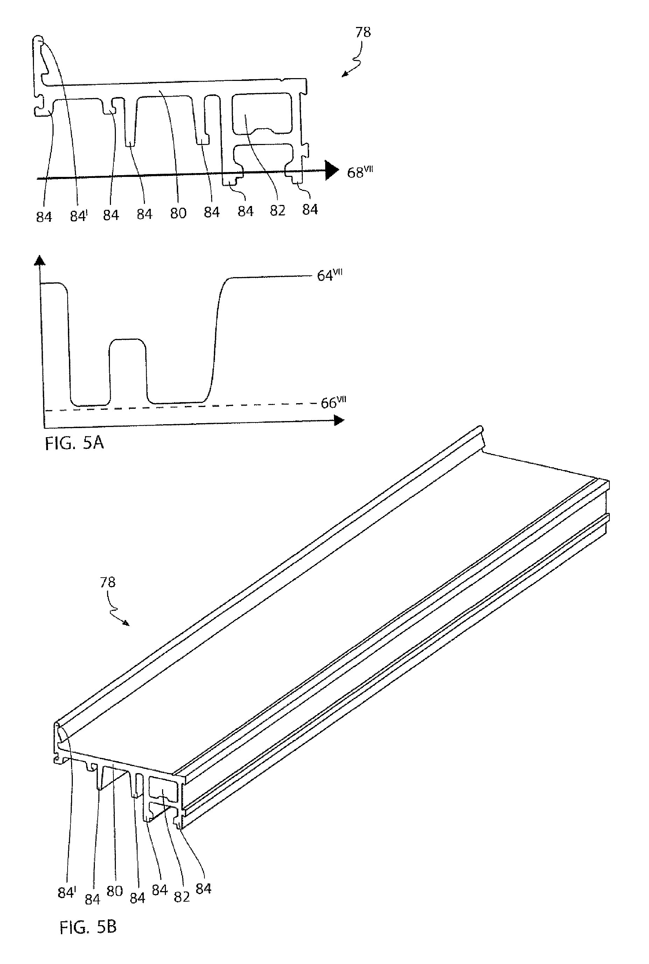

Fig 5A shows a side view of a pultruded building structure in the form of a window frame 78 according to the prior art.. The window frame 78 is part of a window structure (not shown) which in addition comprises a number of window panes (not shown). The window frame 78 according to the prior art is made of fibre reinforced material 80, i.e. a fibre bundle impregnated by matrix material, and is manufactured according to the generally known pultrusion method. The window frame 78 comprises a cavity 82 which is filled by air and a plurality of reinforcing flanges 84 which participate in the load-bearing capabilities of the window frame 78.

Below the window frame 78, a plot has been made showing the load-bearing capability 64^{VII} and the thermal insulating capability 66^{VII} along a transverse direction 68^{VII}. As can be seen in the plot, the present embodiment has two outermost sections of high load-bearing capabilities and low insulation capability. These sections constitute the sections onto which the glass panes are adhered and the window frame is fastened to the rest of the building structure (not shown), respectively. Two sections of low load-bearing and low insulation capabilities are located in-between the outermost sections.

Thus, the structural load and any other forces such as wind which is applied onto or by the glass panes are transmitted to the flange 84' onto which the glass sheets are adhered.. The other flanges 84 may be used for fastening the window frame 78 to the rest of the building structure and will thus also experience an increased stress, i.e. the stress thus induced into this area is higher than the average stress in the window frame 78. The stress may be calculated by a computer having FEM software or may alternatively be derived by experiments or empirically.

A proof of concept experiment has been made using a window structure (not shown) having the measures 1.23x1.48m and comprising a window frame 78. The window frame constitutes 29% of the total area of the window structure (not shown), i.e. the window panes (not shown) constitutes the remaining 71% of the window structure (not shown). The U value of the window frame 78 has been calculated using EN ISO 10077-2 to be 1 26W/m²K. The total U value for the window structure, i.e. the window frame 78 and the glass panes (not shown) has been calculated using EN ISO 10077-1 to be 0.96 W/m²K.

Fig 5B shows a perspective view of a part of the window frame 78 according to the prior art.

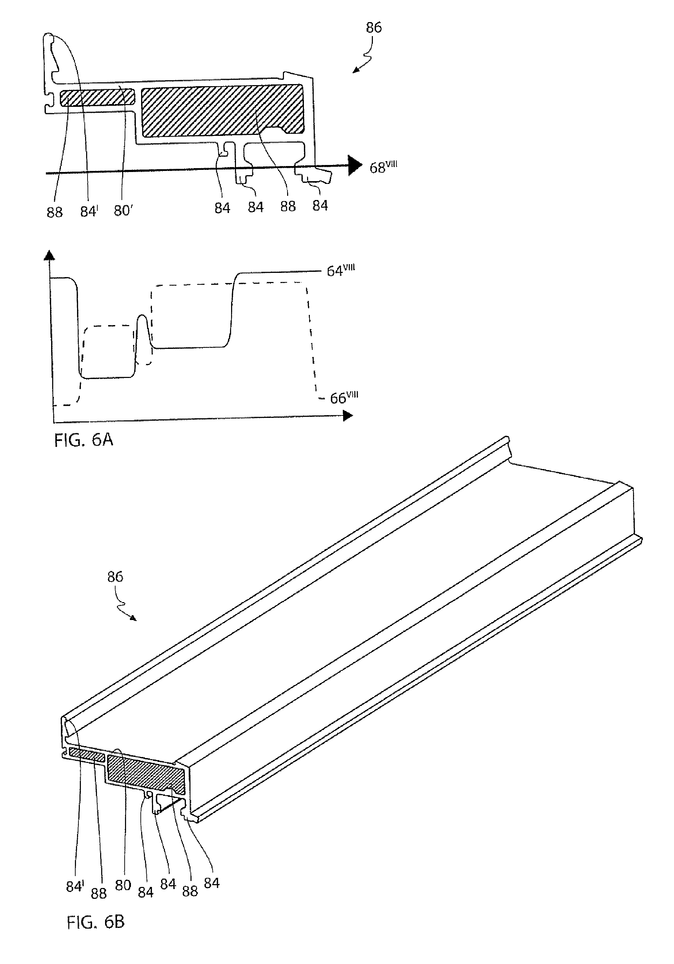

Fig 6A shows a side view of a pultruded building structure in the form of a window frame 86 according to the present invention. The window frame 86 is part of a window structure (not shown) which in addition comprises a number of window sheets or window panes (not shown). The window frame 86 according to the present invention is made of fibre reinforced material 80' and is manufactured according to the pultrusion method presented above. The window frame 86 comprises a cavity 88 which is filled by insulating foam similar to the embodiments shown in connection with fig 4. The window frame 86 comprises reinforcing flanges 84 which participate in the load-bearing capabilities of the window frame 78.

Below the window frame 86, a plot has been made showing the load-bearing capability 64^{VIII} and the thermal insulating capability 66^{VIII} along a transverse direction 68^{VIII}. As can be seen in the plot, the present embodiment has two outermost sections of high load-bearing capabilities and low insulation capability. These sections constitute the section the glass panes are adhered to and the section where the window frame 86 is fastened to the rest of the building structure, respectively Two sections of low load-bearing and high insulation capabilities are located between the outermost sections and constitute the insulating foamed sections 88.

Thus, the structural load and any other forces such as wind which is applied onto or by the glass panes are transmitted to the flange 84' onto which the glass sheets are adhered The other flanges 84 may be used for fastening the window frame 86 to the rest of the building structure and will thus also experience an increased stress, i.e. the stress thus induced into this area is higher than the average stress in the window frame 78 The stress may be calculated by a computer having FEM software or may alternatively be derived by experiments or empirically.

A proof of concept experiment has been made using a window structure (not shown) having the measures 1.23x1.48m and comprising a foam filled window frame 86 according to the present invention. The window frame constitutes 29% of the total area of the window structure (not shown), i.e. the window panes (not shown) constitute the remaining 71% of the window structure (not shown). The U value of the window frame 86 has been calculated using EN ISO 10077-2 to be 1.18W/m²K. The total U value for the window structure, i.e. the window frame 78 and the glass panes (not shown) has been calculated using EN ISO 10077-1 to be 0.94 W/m²K.

Fig 6B shows a perspective view of the window frame 84 according to the present invention.

The results of the proof of concept experiments show that the use of the foam filled window frame reduced the U value of the window structure from 0.96W/ m²K to (0.94 W/m²K compared to the conventional non-foam filled window frame..

In the present specification, all terms such as 'vertical', 'horizontal', 'front', 'rear', 'side', 'outer', 'outwardly', 'downwardly', 'upwardly' etc. are to be construed in the context of the various intentional applications of the elements in question and by no means to be referred to as limiting definitions of orientations referring to e.g. the orientations of elements during the process of use and to the assembly of elements with another on site.. Further, the non-foamed section is understood to include no foam or a low amount of foam.

Although the present invention has above been described with reference to specific, presently preferred embodiments, numerous modifications and amendments are obvious to a person having skill in the art and such modifications or amendments are to be considered part of the present invention without limiting the scope of the invention to the above described embodiments The invention is rather to be construed in the terms of the appending claims.

In the present context, the expression 'building structure' should be construed broadly to not only encompass building structures in the normal sense such as residential buildings for one or more families, industrial buildings, shops and shopping centres, but also building structures such as ships and airplanes, for which the same fundamental principles of structural engineering apply.

Insulating material is understood to mean a material having a thermal conductivity lower than air, such as polymeric foam or aerosol.

### List of parts with reference to the figures:

| | | | |
|---|---|---|---|
| 10 | Pultrusion assembly | 48. | Bubbles |
| 12 | Insulating plate element | 50 | Fibre reinforced structural element |
| 14. | Upper fibre bundle | 52. | Foam |
| 16 | Lower fibre bundle | 54. | Foam promoter |
| 18 | Impregnated fibre assembly | 56. | Cavity |
| 20 | Receiving section | 58. | Cross-section configuration |
| 21. | Further receiving section | 60. | Non-foamed section |
| 22 | Matrix material (resin) | 62. | Foamed section |
| 23. | Further matrix material | 64. | Load-bearing capability |
| 24 | Mandrel | 66 | Thermal insulation properties |
| 26. | Roller | 68 | Transverse direction |
| 28 | Heater | 70 | Building element |
| 30. | Curing section | 72 | Glass sheet |
| 32 | Nozzle | 74 | Spacer |
| 33. | Diverging end | 76. | Insulated space |
| 34. | Resin reservoir | 78 | Window frame (conventional) |
| 36 | Roller conveyor | 80 | Fibre reinforfced material |
| 38 | Continuous fibre reinforced profile | 82 | Cavity |
| 40 | Pulling section | 84. | Flanges |
| 42 | Puller | 86 | Window frame (foam filled) |
| 44 | Outlet | 88 | Foam filled cavity |
| 46. | Cutter | | |

## Claims

1. A method of dimensioning and producing a fibre reinforced structural element including reinforcing fibres and defining a longitudinal direction coextensive with the overall orientation of said reinforcing fibres of said fibre reinforced structural element, said fibre reinforced structural element defining a specific cross-section configuration defining a transverse direction perpendicular to said longitudinal direction, said transverse direction being coextensive with the overall heat transmission direction through said fibre reinforced structural element when said fibre reinforced structural element is positioned in its intentional position in a load-bearing application in a building structure, said method comprising:
i) establishing a stress distribution along said transverse direction of said fibre reinforced structural element,
ii) establishing locations of higher stress along said transverse direction within said fibre reinforced structural element as compared to the average stress along said transverse direction by using said stress distribution,
iii) establishing locations of lower stress along said transverse direction within said fibre reinforced structural element as compared to the average stress along said transverse direction using said stress distribution,
iv) providing said reinforcing fibres defining said longitudinal direction coextensive with the overall orientation of the reinforcing fibres of said reinforcing fibres, an insulating material having a thermal conductivity lower than the thermal conductivity of said reinforcing fibres and an impregnation material being polymeric and curable, said fibres and said materials being mutually compatible,
v) providing a pultrusion assembly
vi) introducing said reinforcing fibres, said insulating material and said impregnation material into said pultrusion assembly for establishing:
a) higher concentrations of said reinforcing fibres at said locations of higher stress along said transverse direction as compared to the average concentration of reinforcing fibres along said transverse direction,
b) lower concentrations of reinforcing fibres at said locations of lower stress along said transverse direction as compared to the average concentration of reinforcing fibres along said transverse direction,
c) larger volumes of said insulating material at said locations of lower stress along said transverse direction as compared to the average amount of insulating material along said transverse direction, and,
d) smaller volumes or no volume of said insulating material at said locations of higher stress along said transverse direction as compared to the average amount of insulating material along said transverse direction, and,
vii) impregnating said reinforcing fibres by said impregnation material and subsequently curing said impregnation material.

2. The method according to claim 1, wherein said impregnation material is based on polyurethane (PUR), polyisocyanurat (PIR) or epoxy.

3. The method according to any of the preceding claims, wherein said reinforced fibres are based on glass fibres, aramid fibres, natural fibres or thermoplastic fibres

4. The method according to any of the preceding claims, wherein said insulating material comprises sheets of glass fibres, aramid fibres, natural fibres or thermoplastic fibres, or alternatively, wherein said insulating material comprises a foamable polymeric material, preferably comprising said impregnation material and a foaming agent

5. The method according to any of the preceding claims, wherein said reinforced fibres are provided in the form of a woven or non-woven web.

6. The method according to any of the preceding claims, wherein steps i), ii) and iii) are performed on a digital representation of said building structure using a computer.

7. A fibre reinforced structural element comprising:
reinforcing fibres defining a longitudinal direction coextensive with the overall orientation of the reinforcing fibres of said reinforcing fibres,
an insulating material having a thermal conductivity lower than the thermal conductivity of said reinforcing fibres, and
a cured polymeric impregnation material enclosing said reinforcing fibres, said fibres and said materials being mutually compatible, said fibre reinforced structural element defining a specific cross-section configuration defining a transverse direction perpendicular to said longitudinal direction, said transverse direction being coextensive with the overall heat transmission direction through said fibre reinforced structural element and defining a stress distribution when said fibre reinforced structural element is positioned in its intentional position in a load-bearing application in a building structure, said reinforcing fibres defining:
higher concentrations at locations of higher stress according to said stress distribution along said transverse direction as compared to the average concentration of reinforcing fibres along said transverse direction, and
lower concentrations at locations of lower stress according to said stress distribution along said transverse direction as compared to the average concentration of reinforcing fibres along said transverse direction,
said insulating material defining:
larger volumes at locations of lower stress according to said stress distribution along said transverse direction as compared to the average amount of insulating material along said transverse direction, and,
smaller volumes or no volume at locations of higher stress according to said stress distribution along said transverse direction as compared to the average amount of insulating material along said transverse direction

8. The fibre reinforced structural element according to claim 7, wherein said structural element defines an overall heat transfer coefficient U along said transverse direction of no more than 0.25 W·m⁻²·K⁻¹, preferably no more than 0.15 W·m⁻²·K⁻¹, more preferably no more than 0.10 W·m⁻²·K⁻¹.

9. The fibre reinforced structural element according to any of the claims 7-8, wherein said specific cross-section configuration defines a first load-bearing portion having said higher concentrations of reinforcing fibres and said smaller volumes or no volume of insulating material, a second non-load-bearing portion juxtaposing said first load-bearing portion and having said lower concentrations of reinforcing fibres and said larger volumes of insulating material and, preferably, a third load-bearing portion juxtaposing said second non-load-bearing portion and having said higher concentrations of reinforcing fibres and said smaller volumes or no volume of insulating material.

10. The fibre reinforced structural element according to claim 9, wherein said second non-load-bearing portion is thicker or alternatively thinner or alternatively equal in size to said first load-bearing portion.

11. The fibre reinforced structural element according to any of the claims 7-10, wherein said fibre reinforced material and said impregnating material is enclosing said insulating material.

12. The method according to any of the claims 7-11, wherein the volume of said reinforcing fibres and the volume of said impregnation material together form between 90% and 100%, preferably between 99% and 100%, of the total volume of said structural element at said locations of higher stress according to said stress distribution along said transverse direction.

13. The method according to any of the claims 7-12, wherein the volume of said insulation material forms between 80% and 99%, preferably between 90% and 95% of the total volume of said structural element at said locations of lower stress according to said stress distribution along said transverse direction.

14. A building structure comprising a fibre reinforced structural element according to any of the claims 7-13 and applied in a load-bearing application in said building structure.

15. The building structure according to claim 14, wherein said building structure comprise an outer upper panel, an outer lower panel, an inner upper panel and an inner lower panel, all panels being adhered to said locations of higher concentrations of fibres.
